# EUROPEAN PATENT APPLICATION

(11) **EP 4 198 413 A1**
(43) Date of publication of application: **21.06.2023**
(21) Application number: 21383133.2
(22) Date of filing: 14.12.2021
(51) Int. Cl.: F24S 25/11, F24S 30/425

(54) **SINGLE-AXIS SOLAR TRACKER**

(71) Applicant: Soltec Innovations, S.L., 30500 Molina de Segura (ES)
(72) Inventor: Molina Cano, Alonso, 30500 Molina de Segura (ES)
(74) Representative: Isern Patentes y Marcas S.L.

(57) **Abstract**

Comprises: supports (2), to support the tracker on the support surface (3); columns (4) supported on the supports (2); rotary connections (5), mounted on the columns (4), and connected to photovoltaic panels (1) to provide the panels (1) with coaxial tracking rotation, wherein each rotary connection (5) supports, and transmits the rotation to, two adjoining panels (1) located one on each side of the corresponding column (4); motor (9), associated with a column (4); longitudinal transmission element (10), arranged through the columns (4), parallel to the coaxial rotation, and configured to receive rotation from the motor (9) in the longitudinal direction; toothed wheel (11) coaxially fixed to the rotary connection (5) of the columns (4); and pinions (12) mounted on the longitudinal transmission element (10), to mesh with the toothed wheels (11). It enables the torque tube or similar to be dispensed with.

## Description

### Technical field of the invention

The present invention is included in the field of solar energy, in particular, single-axis solar trackers. More specifically, the object of the invention relates to a single-axis solar tracker for panels.

### Background of the invention

Within the solar energy, particularly, photovoltaic solar energy sector, single-axis solar trackers are known, wherein several solar panels are connected to a torque tube that transmits tracking rotation to the solar panels, also withstanding the torque loads (caused by wind and gravity) to which the tracker is subjected. The configuration and dimensioning of the torque tube accounts for a large part of the design effort and cost of such trackers.

### Description of the Invention

The present invention solves the aforementioned drawbacks, by means of a single-axis solar tracker according to the main claim. Various optional embodiments of the tracker of the invention are described in the dependent claims and the preferred description.

The present invention proposes a concept of a modular tracker without a torque tube wherein the solar panels, preferably photovoltaic panels, more preferably of the bifacial type, are supported on both sides coinciding with a rotation axis. The tracker includes at least one drive, to drive the rotation of the solar tracker, wherein each drive includes a common longitudinal transmission element, preferably oriented in the north-south direction, on which a series of driving gears are mounted, such as, for example, pinions. Moreover, driven gears, such as, for example, toothed wheel gears, are arranged in correspondence with the driving gears, and which are solidly linked to the panels. In this way, the rotational movement is transmitted from a motor to the longitudinal transmission element, and from there to the panels by means of the aforementioned assemblies of driving gears and driven gears.

### Brief description of the figures

The foregoing and other advantages and features will be more fully understood from the following detailed description of exemplary embodiments with reference to the accompanying drawings, which should be considered by way of illustration and not limitation, wherein:
- Figure 1 shows a perspective view of the tracker of the invention.
- Figure 2 shows a detailed perspective view of the tracker of Figure 1, wherein the motor can be seen mounted on a column.
- Figure 3 shows a detailed perspective view of the tracker of Figure 1, wherein the connection between the toothed wheel and the pinion is shown.

### List of references

- 1: Photovoltaic solar panels
- 2: Supports
- 3: Support surface (ground)
- 4: Columns
- 5: Rotary connections
- 6: Tracking axis
- 7: End projections
- 8: Central portion
- 9: Motor
- 10: Longitudinal transmission element
- 11: Driven gears (toothed wheels)
- 12: Driving gears (pinions)

### Detailed description of a preferred embodiment of the invention

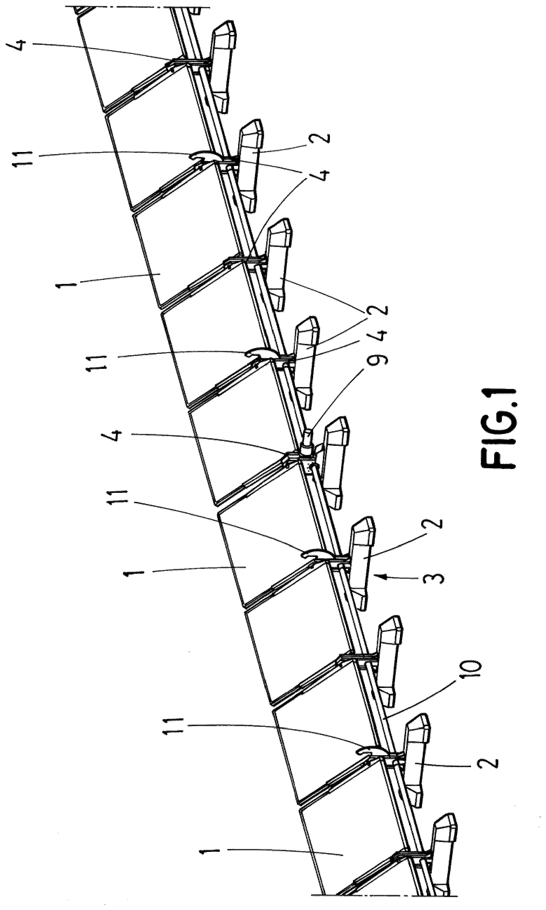

Next, with the help of the aforementioned Figures 1-3, a detailed description of a preferred exemplary embodiment of a single-axis solar tracker according to the invention is provided.

The tracker of the invention, shown in Figure 1, supports a plurality of photovoltaic solar panels (1), which are preferably bifacial.

The tracker comprises a plurality of supports (2), to support other elements of the tracker, and to support said tracker on a support surface (3), such as the ground, on which the tracker is supported. Likewise, the supports (2) provide resistance against extreme loads, as well as the necessary rigidity and stability. The support surface (3) can be the ground, although it can also be a roof, a float, etc., as well as the supports (2) can adopt various configurations, depending on the characteristics of the support surface (3), in particular, of the ground, for example: pipe jackings; ground screws; concrete pads, either prefabricated or made in situ; etc. The example represented shows supports (2) materialised as pads. Some of the examples of supports (2), such as pipe jackings, ground screws, etc., can additionally serve as fixings to anchor the tracker to the support surface (3), although, in general, it is enough that they provide capacity for sufficient underpinning without the need for additional anchoring.

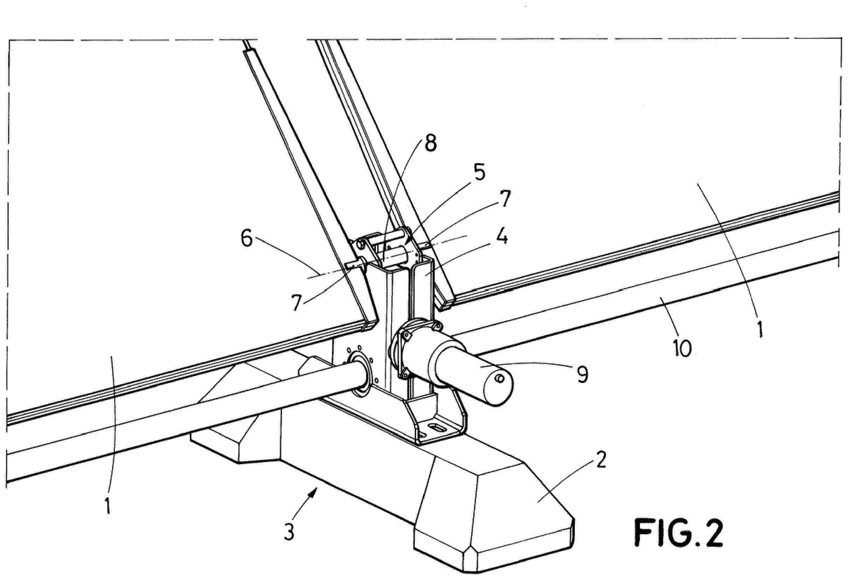

Supported on the supports (2), see Figure 2, there are columns (4), wherein each column (4) preferably rests on the corresponding exclusive support (2) thereof. In turn, the columns (4) support the panels (1), by means of respective first rotary connections (5) configured to provide the panels (1) with rotation about respective tracking axes (6) which are preferably coaxial. Each first rotary connection (5) supports, and transmits the rotation to, two adjoining panels (1), or assemblies of panels (1) located one on each side of the corresponding column (4), such that each panel (1), or assembly of panels (1), is supported by a first rotary connection (5) on each side, except for the two end panels (1), or assembly of panels (1), which are only supported on the internal side thereof. Regarding the present invention, "assembly of panels (1)" is understood as an arrangement of at least two panels (1) vertically mounted one on top of the other.

In the preferred embodiment shown, the first rotary connections (5) comprise a plurality of connection shafts, which are coaxially mounted along the direction of the tracking axis (6), and which include: end projections (7) solidly fixed one to each adjoining panel (1) on one side of the column (4); and a central portion (8) supported on the corresponding column (4), for example by means of bushings (not shown). Preferably, the first rotary connections (5) are solidly fixed to the panels (1), although some degree of freedom is contemplated at the ends of the panels (1).

Figures 1-3 illustrate a preferred embodiment showing all the panels (1) supported by columns (4) at both ends, so that each first rotary connection (5) is in turn supported by the corresponding column (4) thereof. However, alternatively, there may be second rotary connections (not shown), which solidly connect the tracking rotation of pairs of adjoining panels (1), or groups of panels (1), and that are not supported on columns (4).

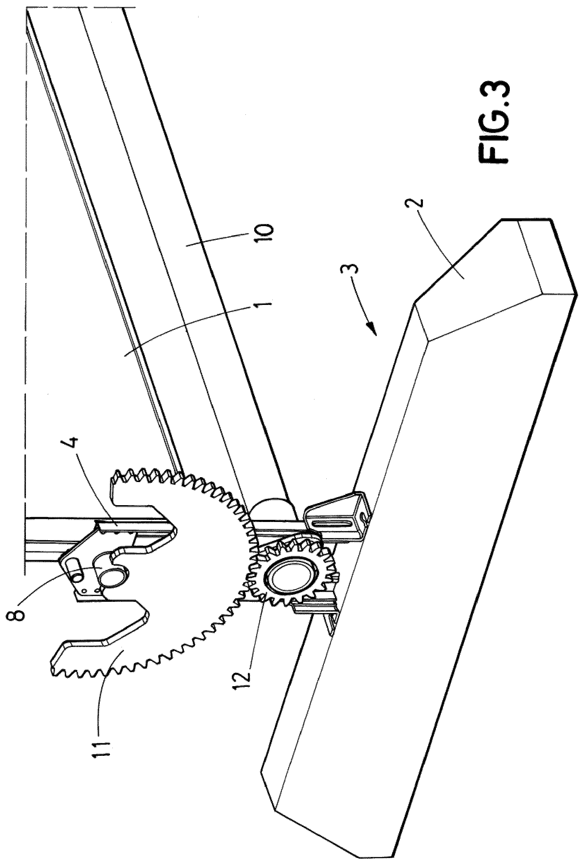

To drive the coaxial tracking rotation, the tracker includes a drive and a transmission, as explained below, in view of Figures 2 and 3. In particular, the tracker includes a motor (9), associated with (preferably mounted on) one of the columns (4), preferably on a column (4) located in a central position with respect to the length of the tracker, that is, with respect to the direction of the tracking axis (6). The tracker also comprises a longitudinal transmission element (10), which receives rotation from the motor (9), in either of the two directions, and which is oriented in a longitudinal direction which is parallel, although not coaxial, to that of the tracking axis (6), crossing the columns (4) at a lower level than the tracking axis (6), and also lower than the minimum level of the lower portion of the panels (1), along the tracking path, to avoid interference. The longitudinal transmission element (10) can have, for example, a cylindrical or polygonal, preferably hollow shape, as well as being preferably formed by sections coaxially assembled by means of connectors. A gear reduction mechanism (not shown), such as a reducer, can be interposed, as usual, between the motor (9) and the longitudinal transmission element (10). Optionally, the gear reduction mechanism, in particular the reduction gear, can be integrated together with the motor in a geared motor.

To transmit the coaxial tracking rotation from the longitudinal transmission element (10) to the panels (1), a gear system (11, 12) is implemented, in particular, driven gears (11) and driving gears (12), as explained below. On at least one of the columns (4), a driven gear (11), such as a toothed wheel, is mounted coaxially fixed to the corresponding rotary connection (5). Likewise, respective driving gears (12), such as pinions, are coaxially mounted on the longitudinal transmission element (10) to mesh with the corresponding driven gears (11) thereof. There can be an assembly of driving gear (11) and driven gear (12) for each column (4), except preferably in the column (4) associated with the motor (9). However, it is preferred to mount driving gear (12) and driven gear (11) only on some columns (4). In the example represented in the figures, starting from the motor (9), on each of the sides, a column (4) with driven gear (11) and driving gear (12) and a free column (4) are alternately shown. Preferably, the driven gears (11), such as the toothed wheels, are solidly fixed to the rotary connections (5).

The rotational movement of an output shaft of the motor (9) is transmitted - where appropriate, through the reduction mechanism - to the longitudinal transmission element (10) and, therefore, solidly to the driving gears (12), which in turn transmit said rotational movement to the driven gears (11) which solidly activate the rotary connections (5) that drive the panels (1), causing the desired solar tracking.

## Claims

1. A single-axis solar tracker, **characterised in that** it comprises:
- solar panels (1);
- supports (2), configured to support the tracker on a support surface (3);
- rotary connections (5), connected to the panels (1) to provide each of the panels (1) with a solar tracking rotation about a respective tracking axis (6), wherein each rotary connection (5) supports, and transmits the rotation to, two adjoining panels (1);
- a motor (9);
- a longitudinal transmission element (10), arranged in a longitudinal direction and configured to receive a rotation from the motor (9) in the longitudinal direction;
- a driven gear (11) coaxially fixed to at least one of the rotary connections (5); and
- respective driving gears (12) mounted on the longitudinal transmission element (10), to mesh with the corresponding driven gears (11) thereof.

2. The single-axis solar tracker, according to claim 1, which additionally comprises columns (4), supported on at least some of the supports (2);
wherein the rotary connections (5) comprise first rotary connections (5), mounted on the columns (4).

3. The single-axis solar tracker, according to claim 2, wherein the first rotary connections (5) connect pairs of panels (1), or pairs of groups of panels (1), which are located one on each side of the corresponding column (4) thereof, wherein each group of panels (1) comprises at least two panels (1) vertically mounted one on top of the other.

4. The single-axis solar tracker, according to any of claims 2-3, wherein the longitudinal transmission element (10) crosses the columns (4).

5. The single-axis solar tracker, according to any of claims 2-4, wherein the first rotary connections (5) are solidly fixed to the panels (1).

6. The single-axis solar tracker, according to any of claims 1-5, wherein the driven gears (11) are solidly fixed to the rotary connections (5).

7. The single-axis solar tracker, according to any of claims 1-6, wherein the first rotary connections (5) comprise a plurality of connection shafts, which are coaxially mounted along the direction of the corresponding tracking axis (6), and which include:
- end projections (7) solidly fixed, one to each adjoining panel (1), on one side of the column (4); and
- a central portion (8) supported on the corresponding column (4).

8. The single-axis solar tracker, according to any of claims 1-7, wherein the panels (1) are supported by a rotary connection (5) on each side.

9. The single-axis solar tracker, according to any of claims 1-8, wherein the longitudinal transmission element (10) is arranged at a lower level than the tracking axis (6) of each panel (1), and also lower than a minimum level of the lower portion of the panels (1) along the tracking path.

10. The single-axis solar tracker, according to any of claims 1-9, wherein the supports (2) comprise pads.

11. The single-axis solar tracker, according to any of claims 1-10, **characterised in that** the panels (1) are photovoltaic panels (1).

12. The single-axis solar tracker, according to claim 11, wherein the panels (1) are bifacial photovoltaic panels (1).

13. The single-axis solar tracker, according to any of claims 1-12, wherein the driving gears (12) comprise pinions and/or the driven gears (11) comprise toothed wheels.

14. The single-axis solar tracker, according to any of claims 1-13, wherein the tracking axes (6) are coaxial, wherein the longitudinal direction of the longitudinal transmission element (10) is parallel, but not coaxial, with the coaxial direction of the tracking axes (6).
